# EUROPÄISCHE PATENTANMELDUNG

(11) **EP 0 767 112 A1**
(43) Veröffentlichungstag der Anmeldung: **09.04.1997**
(21) Anmeldenummer: 96250222.5
(22) Anmeldetag: 07.10.1996
(51) Int. Cl.: B65G 1/00, B65G 67/24, A01F 25/16

(54) **Silobeschickungsvorrichtung**

(30) Priorität: 05.10.1995 DE 19537085
(71) Anmelder: M. Stotz GmbH & Co. KG, 24983 Handewitt (DE)
(72) Erfinder: Peter, Lorenz, 24983 Handewitt (DE); Stotz, Klaus-Dieter, 24983 Handewitt (DE)
(74) Vertreter: Biehl, Christian, Dipl.-Phys. Boehmert & Boehmert Anwaltssozietät

(57) **Zusammenfassung**

Silobeschickungsvorrichtung mit einer selbstfahrenden Brückeneinheit, die eine über das zu beschickende Silo (12) verfahrbaren Grundplattform (10) umfaßt, die an ihren Längsseiten mit einer Vielzahl von im wesentlichen rechtwinklig zur Plattformkante angeordneten, auf dem Silo (12) laufenden Walzenräder (14) versehen ist und von der herab eine Einrichtung die in das Silo (12) einzulagernden Schüttgüter herabfördert.

## Beschreibung

Die Erfindung betrifft eine Silobeschickungsvorrichtung.

Silos, das heißt Großraumbehälter zur Lagerung von Schüttgütern, insbesondere von Futter oder Gärfutter in der Landwirtschaft, können entweder senkrechtstehende Behälter oder auf dem Boden aufgeschüttete Gruben- oder Fahrsilos sein. Letztere sind teilweise aber nicht immer mit Beton eingefaßt.

Im Gegensatz zu Hochsilos, in denen eine Verdichtung wenigstens teilweise bereits durch Schwerkraft erreicht wird, ist die bei horizontal auf dem Boden angeordneten Silos sich von allein einstellende Verdichtung häufig nicht ausreichend. Daher fahren Landwirte mit Ackerschleppern auf den Silos, um sie zu verdichten. Dies ist selbstverständlich nicht optimal, da Ackerschlepper nicht die zum Verdichten richtigen Reifen haben, keinen einen gleichmäßigen Druck über das ganze Silo ausüben und für eine derartige Kurzstreckenfahrten auch nicht richtig motorisiert sind.

Ein weiteres Problem stellt sie übliche Beschickung dar, die mit Hilfe der Ladegabeln von Ackerschleppern oder durch Abschütten von Ackerschleppwagen herab vorgenommen wird. Dadurch ist selten eine gleichmäßige Verteilung möglich, insbeondere kommt es zu Dichtenschwankungen.

Der Erfindung lag daher die Aufgabe zugrunde, eine Silobeschickungsvorrichtung zu schaffen, mit der Silos in Horizontallage auf einfache und bequeme Weise beschickt werden können, wobei die so befüllten Silos zusätzlich noch komprimiert werden sollen.

Erfindungsgemäß wird dies durch eine Silobeschickungsvorrichtung, einen selbstfahrenden Silobereiter mit den Merkmalen des Anspruches 1 gelöst. Die Unteransprüche geben vorteilhafte Ausführungsformen der Erfindung wieder.

Insbesondere ist vorteilhaft, daß durch die Vorsehung einer selbstfahrenden Brückeinheit mit einer Grundplattform, auf die ein Trecker mit Hänger auffahren und das Schüttgut aufschütten kann, eine schnelle Entleerung eines Ackerschleppwagens möglich ist. Die Silobeschickungsvorrichtung wird sodann selbstfahrend auf ihrer Vielzahl von Reifen auf das Silo auffahren und nach und nach das Schüttgut auf dem Silo verteilen. Gleichzeitig wird der neu ausgebrachte Bestandteil komprimiert.

Vorteilhafterweise werden seitliche Auffahrrampen 16 an der Grundplattform 10 seitlich nach unten hin abfallend vorgesehen, um das Auffahren mit einem Trecker zu erleichtern. In einer besonders bevorzugten Ausführungsform weist die Silobeschickungsvorrichtung weiter äußere Walzenräder- oder Hochdruckreifenpaare auf, die auf den Seiten eines Silos laufen. Da diese bei der Beschickung durch Befahren mit einem Trecker stören, sind sie mit Hilfe eines Gelenks abschwenkbar angelenkt, und können in einer wiederum bevorzugten Ausführungsform die Grundplattform selbst anheben, nachdem ein Transportwagen die Plattform verlassen hat, so daß die Silobeschickungsvorrichtung in der richtigen Höhe auf ein Silo zufährt.

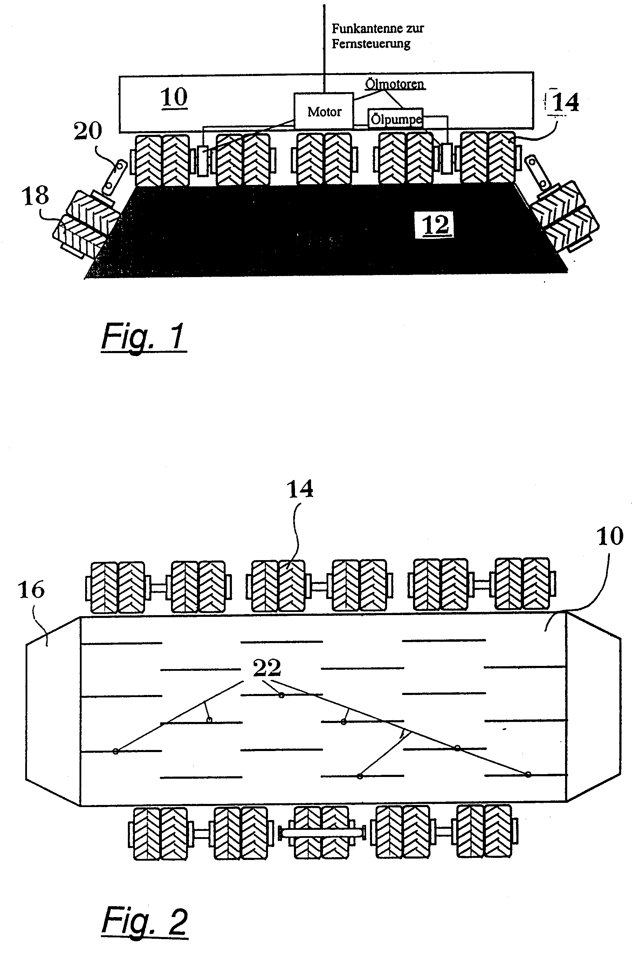

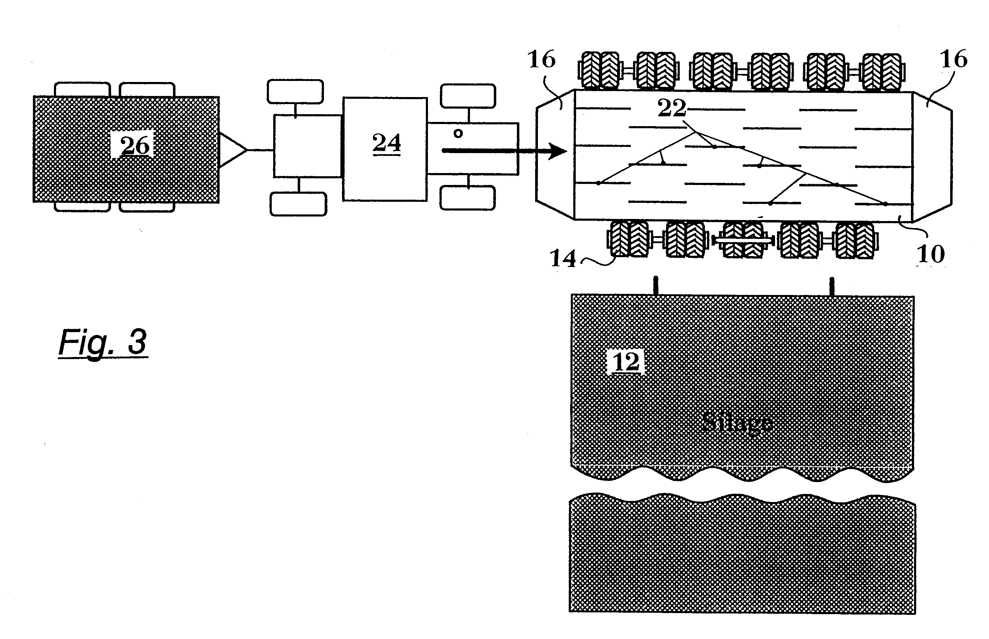

Wie in den Fig. 2 und 3 gut zu erkennen, werden die Walzenreifen an beiden Längsseiten der Grundplattform versetzt zueinander angeordnet, um die gesamte Oberfläche des Silos zu verdichten. Auf der Oberseite der Grundplattform werden Kratzböden vorgesehen, um in das Silo einzubringende Gegenstände gleichmäßig auszufördern.

Die Fortbewegung wird vorteilhafterweise mit einer Ölpumpe und jeweils zwischen Walzenradpaaren angeordneten Ölmotoren bewirkt, wobei eine Funkfernsteuerung es möglich macht, die Silobereitungsvorrichtung von einem festen Standort aus zu steuern.

Als Dimensionen werden Längsabmessungen der Grundplattform von ca. 7 bis 10 m bei ungefähr halb so großer Breite vorgeschlagen, sowie ein Gewicht von 30 bis 40 t, das zusätzlich noch mit weiteren 20 t an Schüttgut belastet werden kann.

Weitere Merkmale und Vorteile der Erfindung ergeben sich aus nachfolgender Beschreibung eines bevorzugten Ausführungsbeispiels anhand der beigefügten Zeichnungen. Dabei zeigt:
- Fig. 1: ein Horizontalsilo im Querschnitt mit einer auf dem Silo laufenden Silobeschickungsvorrichtung nach der Erfindung,
- Fig. 2: die Silobeschickungsvorrichtung mit ihrer Grundplattform und den an den beiden Längsseiten angeordneten Walzenreifen, und
- Fig. 3: eine schematische Darstellung des Befüllens der Silobeschickungsvorrichtung und bevor diese auf ein Silo aufrollt.

Die in der Fig. 1 dargestellt Silobeschickungsvorrichtung besteht aus einer Grundplattform 10, an deren Kanten sowie gegebenenfalls auch unter der eine Vielzahl von Walzenreifen 14 vorgesehen sind, die es der Grundplattform erlauben, quer zu ihrer Längserstreckung über ein Silo 12 zu rollen. Seitlich angeordnete Walzenreifen können dabei auf den seitlichen Kanten des Silos rollen. Diese seitlichen Reifen sind über ein Schwenkstück 20 mit der Grundplattform und den Achsen der übrigen Räder verbunden, so daß sie bei Abrollen der Silobereitungsvorrichtung von dem Silo in gleicher Ebene, wie die übrigen Rollen, verlaufen können. Die Abwinkelung kann jedoch auch hydraulisch so gesteuert werden, daß der Silobereiter schon vor Aufrollen auf ein Silo sich anhebt, um das auszubringende Gut gleichmäßig an der Oberseite des Silos auszubringen.

In der Fig. 2 sind zusätzlich noch seitliche Auffahrrampen 16 dargestellt, wie in der Fig. 3 dargestellt, zum besseren Auffahren eines Ackerschleppers 24 mit seinem anhängenden Ackerwagen 26 dienen. Vom Ackerwagen 26 kann direkt auf die Oberseite der Grundplattform 10, also auf die Beschickungsvorrichtung das Schüttgut entleert werden. Nach Verlassen des Transportwagens kann die Silobeschickungsvorrichtung sich dann selbsttätig unter Abstützung auf den äußeren Rädern anheben und auf das Silo auffahren, wobei die auf der Oberseite der Grundplattform vorgesehenen Kratzböden 22 das aufgefahrene Gut gleichmäßig in Schichtdicken von ca. 5 bis 10 cm unter sich verteilen. Durch die sofort nachfolgenden Hochdruckräder und das hohe Fahrzeuggewicht wird das Gut schnell verdichtet, wobei sich dieser Vorgang entsprechend der ausgebrachten Menge bzw. Fläche häufig wiederholen kann. Die Silos werden entsprechend den gewählten Dimensionen des Silobereiters ca. 7 bis 8 m breit, bis zu 5 m hoch sein und können in der Länge unbegrenzt sein.

Als Reifen werden zwar mit einem einfachen Profil versehene, jedoch mit einer möglichst großen Auflagefläche versehen Walzenreifen mit großem Querschnitt vorgeschlagen.

Als Antrieb wird vorgeschlagen, ein ca. 200 PS starken Motor zu verwenden, der über entsprechende Ölpumpen und Ölmotoren jeweils paarweise angebrachte Walzenreifen wirkt. Die gesamte Silobeschickungsvorrichtung kann per Funk ferngesteuert werden.

## Patentansprüche

1. Silobeschickungsvorrichtung gekennzeichnet durch eine selbstfahrende Brückeneinheit, mit einer über das zu beschickende Silo (12) verfahrbaren Grundplattform (10), die an ihren Längsseiten mit einer Vielzahl von im wesentlichen rechtwinklig zur Plattformkante angeordneten, auf dem Silo (12) laufenden Walzenräder (14) versehen ist und von der herab eine Einrichtung die in das Silo (12) einzulagernden Schüttgüter herabfördert.

2. Silobeschickungsvorrichtung nach Anspruch 1, gekennzeichnet durch an den Schmalseiten der Grundplattform (10) angeordnete seitliche Auffahrrampen (16).

3. Silobeschickungsvorrichtung nach einem der vorangehenden Ansprüche, gekennzeichnet durch endseitige Radpaare, die außerhalb der Breite des Silos angeordnet, seitlich auf den schräg abfallenden Längskanten des Silos laufend die Seiten verdichten.

4. Silobeschickungsvorrichtung nach Anspruch 3, dadurch gekennzeichnet, daß die endseitigen Räderpaare verschwenkbar an der Grundplattform angelenkt sind, wobei eine Hydraulikschwenkeinheit vorgesehen ist, die diese Radpaare zur Anhebung der Grundplattform (10) über die Höhe des zu beschickenden Silos anwinkelt.

5. Silobeschickungsvorrichtung nach einem der vorangehenden Ansprüche, dadurch gekennzeichnet, daß die Walzenräder (14) an den beiden Längsseiten der Grundplatte (10) versetzt zueinander angeordnet sind, so daß die gesamte Oberfläche des Silos komprimiert wird, wenn die Silobereitungsvorrichtung herüber rollt.

6. Silobeschickungsvorrichtung nach einem der vorangehenden Ansprüche, gekennzeichnet durch Kratzböden (22) auf der Grundplattform (10) zur gleichmäßigen Ausbringung des Schüttgutes auf das Silo.

7. Silobeschickungsvorrichtung nach einem der vorangehenden Ansprüche, gekennzeichnet durch einen Ölpumpenantrieb, der jeweils auf ein Paar von Walzenrädern wirkt.

8. Silobeschickungsvorrichtung nach einem der vorangehenden Ansprüche, gekennzeichnet durch eine Funkfernsteuerung.

9. Verfahren zum Beschicken eines Silos in Horizontallage, gekennzeichnet durch
- Beschicken einer sich oberhalb des Silos (12) befindlichen Einrichtung,
- Verfahren dieser Einrichtung entlang der Erstreckung des Silos (12),
- gleichzeitiges Verdichten des Silos (12) durch mit der sich über dem Silo (12) befindlichen Einrichtung beschwerte Walzenräder (14), und
- Herabfördern des einzulagernden Schüttgutes von der sich oberhalb des Silos befindlichen Einrichtung in den mit den Walzenrädern (14) zu verdichtenden Oberflächenbereich des Silos (12) .
